# EUROPÄISCHE PATENTSCHRIFT

(11) **EP 1 156 262 B1**
(45) Veröffentlichungstag und Bekanntmachung des Hinweises auf die Patenterteilung: **21.09.2005**
(21) Anmeldenummer: 00110621.0
(22) Anmeldetag: 18.05.2000
(51) Int. Cl.: F16M 13/04

(54) **Tragbares Stativ**
Portable stand
Support portable

(43) Veröffentlichungstag der Anmeldung: 21.11.2001
(73) Patentinhaber: Steadystick GmbH, 81249 München (DE)
(72) Erfinder: Linnecke, Roger, 83734 Hausham (DE)
(74) Vertreter: Hofstetter, Alfons J.

(56) Entgegenhaltungen:
- EP-A- 0 919 764
- US-A- 2 703 691
- US-A- 4 963 904
- US-A- 5 839 704
- US-A- 5 940 644

## Beschreibung

Die vorliegende Erfindung betrifft ein tragbares Stativ, insbesondere ein tragbares Stativ zur Aufnahme und Abstützung von Videokameras, Fotoapparaten und anderen optischen Aufnahmegeräten.

Derartige tragbare Stative sind zum Beispiel aus der US-A-5 839 704 und der US-A-4 963 904 bekannt und dienen insbesondere zur Abstützung von Kameras. Bei fotografischen Aufnahmen wie auch insbesondere bei Video- oder Filmaufnahmen ist es wünschenswert, möglichst ruhige und verwackelungsfreie Aufnahmen im Stand sowie in Bewegung zu erzielen. Des weiteren sollten die Kamerabewegungen in alle Achsrichtungen möglich sein. Bekannte tragbare Stative weisen hierfür mindestens ein Gegengewicht zum Ausgleich von Bewegungen auf.

Nachteilig an diesen bekannten tragbaren Stativen ist jedoch, daß das optisch auffällige Gegengewicht häufig weit in den Raum ragt, so daß es zu einem Hindernis wird, welches die Bewegungsfreiheit der die Kamera bedienenden Person stark einschränkt. Aufgrund des hohen Gesamtgewichtes können derartige Stative nur kurze Zeit getragen werden, wodurch die Verwendungsmöglichkeiten dieser Stative stark eingeschränkt sind.

Es ist daher Aufgabe der vorliegenden Erfindung, ein tragbares Stativ der eingangs genannten Art bereitzustellen, daß die vorbeschriebenen Nachteile bekannter Stative überwindet und ruhige und verwackelungsfreie Aufnahmen mit optischen Aufnahmevorrichtungen gewährleistet.

Zur Lösung dieser Aufgabe dient ein gattungsgemäßes tragbares Stativ gemäß den Merkmalen des Anspruchs 1.

Vorteilhafte Ausgestaltungen sind in den Unteransprüchen beschrieben.

Ein erfindungsgemäßes tragbares Stativ, insbesondere ein tragbares Stativ zur Aufnahme und Abstützung von Videokameras, Fotoapparaten und anderen optischen Aufnahmegeräten weist einen länglichen Grundkörper und einen an einem Ende des Grundkörpers angeordneten ersten Handgriff sowie eine an dem gegenüberliegenden Ende des Grundkörpers angeordneten Anschlussplatte zur Aufnahme der zu tragenden Vorrichtung auf, wobei zwischen einem ersten Handgriff und einer Anschlussplatte zur Aufnahme der zu tragenden Vorrichtungen an einem Grundkörper des Stativs ein feststellbarer und verschiebbarer Arretierschlitten angeordnet ist und an dem Arretierschlitten ein kugelkopfgelagerter, in sich drehbarer zweiter Handgriff beweglich befestigt ist. Durch die erfindungsgemäße Ausgestaltung des tragbaren Stativs wird der Schwerpunkt der zu tragenden Vorrichtung, insbesondere von Kameras, derartig stabilisiert, daß eine wesentlich höhere Trägheit des Tragegewichts erreicht wird. Dadurch sind stabile und wackelfreie Aufnahmen über alle Bewegungsachsen möglich, ohne daß es eines Gegengewichtes bedarf.

In einer vorteilhaften Ausgestaltung der Erfindung weist der Arretierschlitten eine Anschlussvorrichtung zur Aufnahme eines Anschlusszapfens eines Kugelgelenks auf, wobei das Kugelgelenk in einer Kugelkopfverbindung gelagert ist und zudem an der dem Kugelgelenk gegenüberliegenden Seite der Kugelkopfverbindung eine Aufnahme für einen Verbindungszapfen des drehbaren zweiten Handgriffs aufweist. Dadurch ist gewährleistet, daß das erfindungsgemäße Stativ über alle und in alle Bewegungsachsen bewegt werden kann.

In einer weiteren vorteilhaften Ausgestaltung des erfindungsgemäßen Stativs weist die Kugelkopfverbindung eine Feststellschraube zur Arretierung der Kugelkopfverbindung auf. Damit ist ein optimaler Winkel zwischen dem zweiten Handgriff und dem Grundkörper des Stativs einstellbar. Es ist dadurch möglich, die unterschiedlichen Schwerpunkte verschiedener an dem Stativ befestigter Vorrichtungen auszugleichen. Zudem ist es möglich, unterschiedliche Höheneinstellungen des zweiten Handgriffs im Bezug zum Grundkörper auszugleichen.

In einer weiteren vorteilhaften Ausgestaltung der Erfindung ist im Bereich des ersten Handgriffs eine Feststellmuffe zur Arretierung eines innerhalb des Grundkörpers geführten und ausziehbaren Verlängerungskörpers angeordnet. Durch den Verlängerungskörper ergibt sich vorteilhafterweise eine nahezu Verdoppelung der Länge des Stativs, wodurch die Einsatzmöglichkeiten des Stativs deutlich erhöht werden. Der erste Handgriff kann dabei an dem Verlängerungskörper befestigt sein. Der Grundkörper und der Verlängerungskörper sind vorteilhafterweise rohrförmig ausgebildet.

In einer weiteren vorteilhaften Ausgestaltung des erfindungsgemäßen Stativs weist der erste Handgriff an dem dem Grundkörper und/oder dem Verlängerungskörper abgewandten Ende eine Verbindungsvorrichtung zur Aufnahme eines Gürtelsteckbügels oder eines Standfußes auf. Der Gürtelsteckbügel kann dabei eine Kugelkopfverbindung zum Anbringen an die Verbindungsvorrichtung aufweisen. Durch den Gürtelsteckbügels ist gewährleistet, daß das erfindungsgemäße Stativ über einen sehr langen Zeitraum getragen werden kann, da eine optimale Gewichtsverteilung der Gewichte des Stativs und der zu tragenden Vorrichtung erfolgt.

In einer weiteren vorteilhaften Ausgestaltung der Erfindung weist die Anschlussplatte einen Schnappverschluss oder Bajonettverschluss zur lösbaren Befestigung der zu tragenden Vorrichtung auf. Dadurch ist eine schnelle Montage der Vorrichtung auf das erfindungsgemäße Stativ gewährleistet.

Weitere Einzelheiten, Merkmale und Vorteile der Erfindung ergeben sich aus einem in den folgenden Zeichnungen dargestellten Ausführungsbeispiel. Es zeigen:
- Figur 1: eine Seitenansicht des erfindungsgemäßen tragbaren Stativs;
- Figur 2: eine teilweise in einer Explosionszeichnung dargestellte Seitenansicht des erfindungsgemäßen Stativs;
- Figur 3: eine perspektivische Ansicht von oben auf das erfindungsgemäße Stativ; und
- Figur 4: eine perspektivische Ansicht von oben auf das erfindungsgemäße Stativ mit einem Verlängerungskörper.

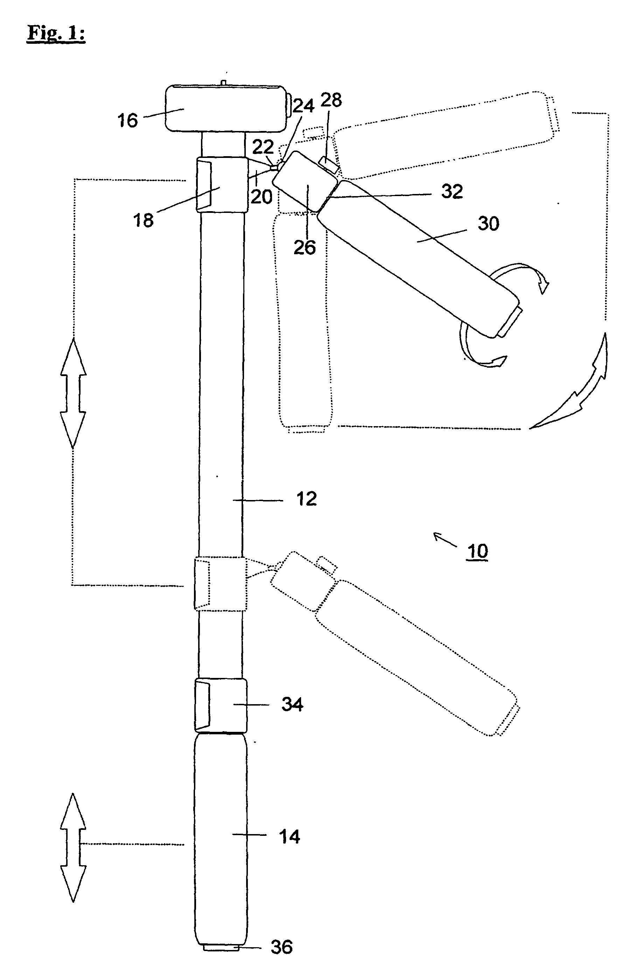

Figur 1 zeigt eine Seitenansicht des tragbaren Stativs 10 mit einem länglichen Grundkörper 12 und einem an einem Ende des Grundkörpers 12 angeordneten ersten Handgriff 14 sowie einer an dem gegenüberliegenden Ende des Grundkörpers 12 angeordneten Anschlussplatte 16 zur Aufnahme der zu tragenden Vorrichtung. Derartige Vorrichtungen können Video- und Filmkameras, Fotoapparate oder andere optische Aufnahmegeräte sein. Man erkennt, daß zwischen dem ersten Handgriff 14 und der Anschlussplatte 16 am Grundkörper 12 ein feststellbarer und verschiebbarer Arretierschlitten 18 angeordnet ist. An dem Arretierschlitten 18 ist ein kugelkopfgelagerter, in sich drehbarer zweiter Handgriff 30 beweglich befestigt.

Der Arretierschlitten 18 weist dabei eine Anschlussvorrichtung 20 zur Aufnahme eines Anschlusszapfens 22 eines Kugelgelenks 24 auf. Das Kugelgelenk 24 ist dabei in einer Kugelkopfverbindung 26 gelagert. An der dem Kugelgelenk 24 gegenüberliegenden Seite der Kugelkopfverbindung 26 ist eine Aufnahme für einen Verbindungszapfen 32 des drehbaren zweiten Handgriffs 30 ausgebildet. Zudem weist die Kugelkopfverbindung 26 eine Feststellschraube 28 zur Arretierung der Kugelkopfverbindung 26 auf. Man erkennt deutlich, daß der Handgriff 30 in sich um seine Längsachse drehbar ist. Zudem ist der zweite Handgriff 30 über das Kugelgelenk 24 bewegbar.

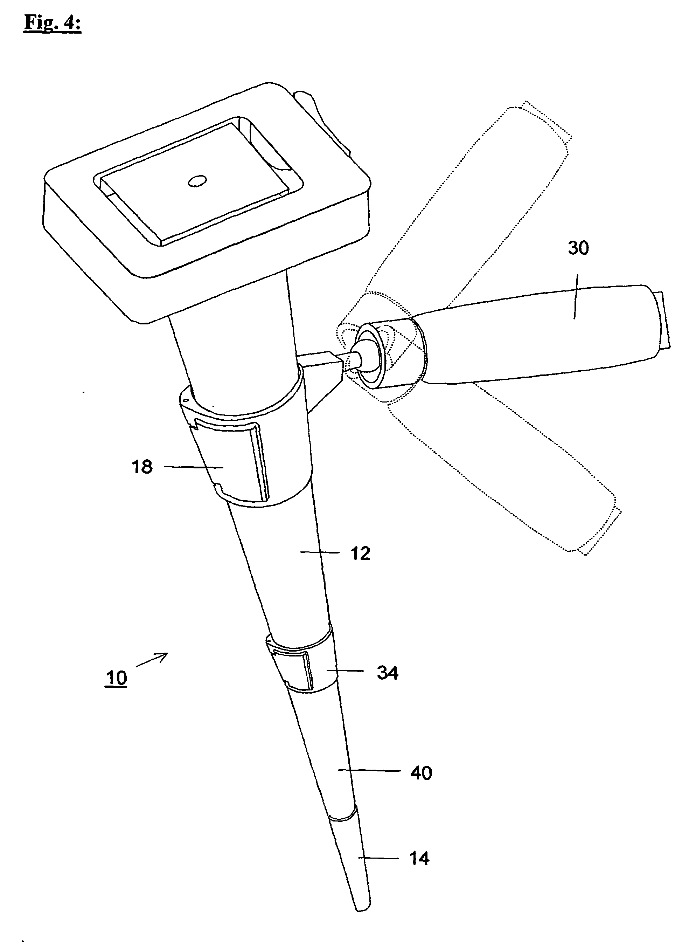

Des weiteren erkennt man, daß im Bereich des ersten Handgriffs 14 eine Feststellmuffe 34 zur Arretierung eines innerhalb des Grundkörpers 12 geführten und ausziehbaren Verlängerungskörpers 40 (vgl. Figur 4) angeordnet ist. Der erste Handgriff 14 ist dabei an dem Verlängerungskörper 40 befestigt. Der erste Handgriff 14 weist zudem an dem dem Grundkörper 12 und/oder dem Verlängerungskörper 40 abgewandten Ende eine Verbindungsvorrichtung 36 zur Aufnahme eines Gürtelsteckbügels (nicht dargestellt) oder eines Standfußes (nicht dargestellt) auf. Dabei kann der Gürtelsteckbügels eine Kugelkopfverbindung zum Anbringen an die Verbindungsvorrichtung 36 aufweisen.

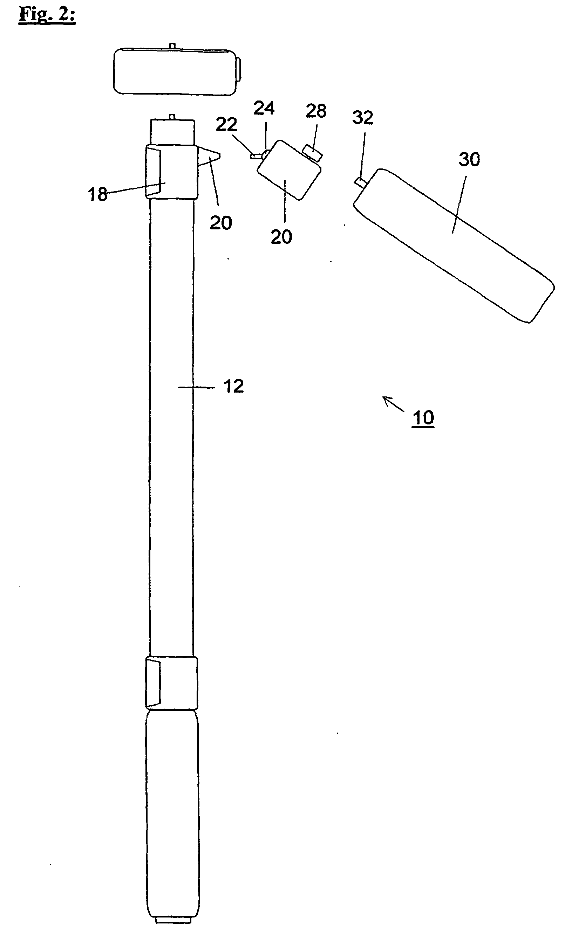

Figur 2 zeigt eine teilweise in einer Explosionszeichnung dargestellte Seitenansicht des Stativs 10. Man erkennt den Aufbau und die Lagerung des zweiten Handgriffs 30 über den Verbindungszapfen 32 an der Kugelkopfverbindung 26. Des weiteren erkennt man die Befestigung der Kugelkopfverbindung 26 über den Anschlusszapfens 22 des Kugelgelenks 24 an der Anschlussvorrichtung 20 des Arretierschlittens 18.

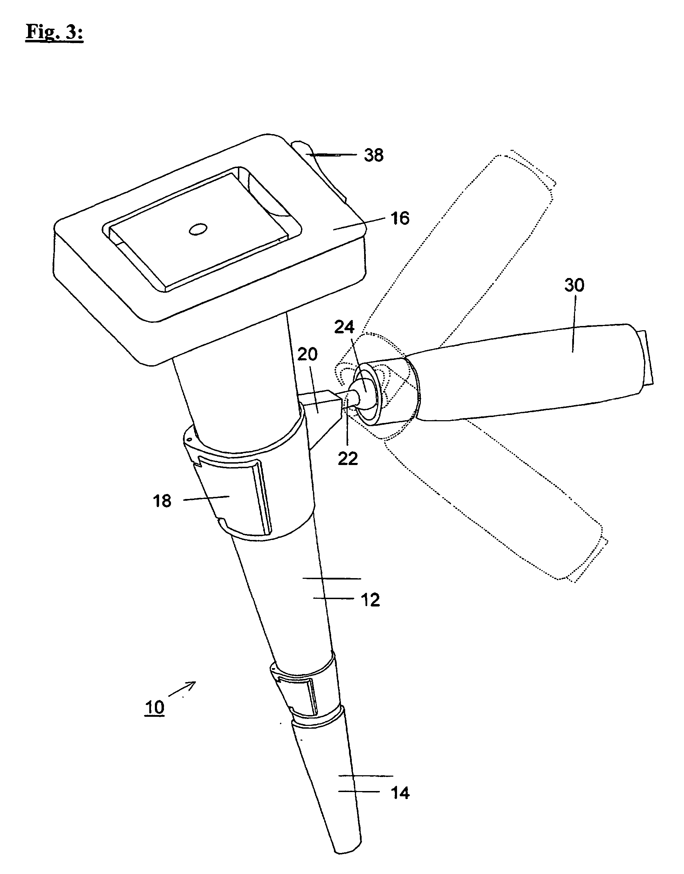

Figur 3 zeigt eine perspektivische Ansicht von oben auf das tragbare Stativ 10. Man erkennt deutlich die Beweglichkeit des ersten Handgriffs 30 mittels des Kugelgelenks 24 relativ zum Grundkörper 12 des Stativs 10. Zudem wird deutlich, daß in dem dargestellten Ausführungsbeispiel der Grundkörper 12 rohrförmig ausgebildet ist. Die Anschlussplatte 16 weist eine Feststellvorrichtung 38 zur Befestigung einer Kamera oder ähnlichem auf. Zudem kann die Anschlussplatte 16 einen Schnappverschluss oder Bajonettverschluss zur lösbaren Befestigung der zu tragenden Vorrichtung aufweisen.

Figur 4 zeigt eine perspektivische Ansicht von oben auf das Stativ mit dem ausgezogenen Verlängerungskörper 40. Man erkennt, daß in dem dargestellten Ausführungsbeispiel sowohl der Grundkörper 12 wie auch der Verlängerungskörper 40 rohrförmig ausgebildet sind. Der erste Handgriff 14 ist hierbei an dem Verlängerungskörper 40 befestigt.

## Patentansprüche

1. Tragbares Stativ, insbesondere tragbares Stativ zur Aufnahme und Abstützung von Videokameras, Fotoapparaten und anderen optischen Aufnahmegeräten, mit einem länglichen Grundkörper (12) und einem an einem Ende des Grundkörpers (12) angeordneten ersten Handgriff (14) sowie einer an dem gegenüberliegenden Ende des Grundkörpers (12) angeordneten Anschlussplatte (16) zur Aufnahme der zu tragenden Vorrichtung, wobei zwischen dem ersten Handgriff (14) und der Anschlussplatte (16) am Grundkörper (12) ein feststellbarer und verschiebbarer Arretierschlitten (18) angeordnet ist und an dem Arretierschlitten (18) ein kugelkopfgelagerter, in sich drehbarer zweiter Handgriff (30) beweglich befestigt ist.

2. Tragbares Stativ nach Anspruch 1,
**dadurch gekennzeichnet,**
**daß** der Arretierschlitten (18) eine Anschlussvorrichtung (20) zur Aufnahme eines Anschlusszapfens (22) eines Kugelgelenks (24) aufweist, wobei das Kugelgelenk (24) in einer Kugelkopfverbindung (26) gelagert ist und zudem an der dem Kugelgelenk (24) gegenüberliegenden Seite der Kugelkopfverbindung (26) eine Aufnahme für einen Verbindungszapfen (32) des drehbaren zweiten Handgriffs (30) aufweist.

3. Tragbares Stativ nach Anspruch 1 oder 2,
**dadurch gekennzeichnet,**
**daß** die Kugelkopfverbindung (26) eine Feststellschraube (28) zur Arretierung der Kugelkopfverbindung (26) aufweist.

4. Tragbares Stativ nach einem der vorhergehenden Ansprüche,
**dadurch gekennzeichnet,**
**daß** im Bereich des ersten Handgriffs (14) eine Feststellmuffe (34) zur Arretierung eines innerhalb des Grundkörpers (12) geführten und ausziehbaren Verlängerungskörpers (40) angeordnet ist.

5. Tragbares Stativ nach Anspruch 4,
**dadurch gekennzeichnet,**
**daß** der erste Handgriff (14) an dem dem Grundkörper (12) und/oder dem Verlängerungskörper (40) abgewandten Ende eine Verbindungsvorrichtung (36) zur Aufnahme eines Gürtelsteckbügels oder eines Standfußes aufweist.

6. Tragbares Stativ nach Anspruch 4 oder 5,
**dadurch gekennzeichnet,**
**daß** der Grundkörper (12) und der Verlängerungskörper (40) rohrförmig ausgebildet sind.

7. Tragbares Stativ nach einem der vorhergehenden Ansprüche,
**dadurch gekennzeichnet,**
**daß** die Anschlussplatte (16) einen Schnappverschluss oder Bajonettverschluss zur lösbaren Befestigung der zu tragenden Vorrichtung aufweist.

8. Tragbares Stativ nach einem Ansprüche 4 bis 6,
**dadurch gekennzeichnet,**
**daß** der erste Handgriff (14) an dem Verlängerungskörper (40) befestigt ist.

## Claims

1. A portable stand, in particular a portable stand for holding and supporting video cameras, photo-cameras and other optical recording devices, having an oblong basic body (12) and a first handle (14) provided at one end of said basic body (12), as well as a connection plate (16) provided at the respective opposite end of said basic body (12) for holding the device to be carried and supported wherein a slidable arrest carriage (18) which can be locked in position is provided on said basic body (12), between said first handle (14) and said connection plate (16), and a second, turning handle (30) which runs in ball headed bearing means is movably mounted on said arrest carriage (18).

2. The portable stand according to claim 1
**characterized in that**
said arrest carriage (18) includes connection means (20) for receiving a connection pin (22) of a ball-and-socket joint (24), said ball-and-socket joint (24) running in a ball-headed connection means (26) and moreover being equipped to receive, on the side of said ball-headed connection means (26) opposite said ball-and-socket joint (24), a connection pin (32) of said second, turning handle (30).

3. The portable stand according to claims 1 or 2
**characterized in that**
said ball-headed connection means (26) includes a locking screw (28) for locking said ball-headed connection means (26) in position.

4. The portable stand according to one of the preceding claims
**characterized in that**
in the area of said first handle (14) a locking sleeve (34) is provided for locking in position an extendable extension body (40) guided within said basic body (12).

5. The portable stand according to claim 4
**characterized in that**
said first handle (14) at the end facing away from said basic body (12) and/or said extension body (40) exhibits a connecting means (36) for receiving a belt clip or a support post.

6. The portable stand according to claim 4 or 5
**characterized in that**
said basic body (12) and said extension body (40) are of tubular design.

7. The portable stand according to one of the preceding claims
**characterized in that**
said connection plate (16) exhibits a snap or bayonet catch for detachably attaching thereto the device to be carried and supported.

8. The portable stand according to claims 4 to 6
**characterized in that**
said first handle (14) is mounted on said extension body (40).

## Revendications

1. Pied portable, notamment pied portable sur lequel des caméras vidéo, des appareils photo et d'autres appareils de prise optique peuvent être montés et supportés, comportant un corps de base allongé (12) ainsi qu'une première poignée (14) disposée à une extrémité du corps de base (12) ainsi qu'une plaque d'accouplement (16) disposée à l'extrémité opposée du corps de base (12) et destinée à abriter le dispositif prévu d'être monté, un glisseur d'arrêt (18) immobilisable et déplaçable étant disposé sur le corps de base (12) entre la première poignée (14) et la plaque d'accouplement (16), une seconde poignée (30) rotative en elle-même et montée sur tête sphérique étant fixée de façon mobile sur le glisseur d'arrêt (18).

2. Pied portable selon la revendication 1,
**caractérisé en ce**
**que** le glisseur d'arrêt (18) comporte un dispositif de connexion (20) destiné à reprendre une cheville de connexion (22) d'une rotule (24), la rotule (24) étant montée dans un assemblage à tête sphérique (26) et comportant par ailleurs, sur le côté de l'assemblage à tête sphérique (26) opposé à la rotule (24), un logement destiné à reprendre une cheville de connexion (32) de la seconde poignée (30) rotative.

3. Pied portable selon la revendication 1 ou 2,
**caractérisé en ce**
**que** l'assemblage à tête sphérique (26) comporte une vis d'arrêt (28) pour bloquer l'assemblage à tête sphérique (26).

4. Pied portable selon l'une des revendications précédentes,
**caractérisé en ce**
**qu'**au droit de la première poignée (14), un manchon d'arrêt (34) est prévu pour bloquer une rallonge (40) téléscopique et guidée à l'intérieur du corps de base (12).

5. Pied portable selon la revendication 4,
**caractérisé en ce**
**que** la première poignée (14) comporte, à l'extrémité opposée au corps de base (12) et/ou à la rallonge (40), un adaptateur (36) prévu de reprendre une boucle d'attache à la ceinture ou un montant.

6. Pied portable selon la revendication 4 ou 5,
**caractérisé en ce**
**que** le corps de base (12) et la rallonge (40) sont prévus sous forme tubulaire.

7. Pied portable selon l'une des revendications précédentes,
**caractérisé en ce**
**que** la plaque d'accouplement (16) comporte une fermeture à ressort ou un joint à baïonnette pour la fixation amovible du dispositif devant être supporté.

8. Pied portable selon l'une des revendications 4 à 6,
**caractérisé en ce**
**que** la première poignée (14) est directement rapportée sur la rallonge (40).
